Europäisches Patentamt

European Patent Office

Office européen des brevets

(19)

(11) Veröffentlichungsnummer: **0 331 677**
**B1**

(12) **EUROPÄISCHE PATENTSCHRIFT**

(45) Veröffentlichungstag der Patentschrift: **10.10.90**

(21) Anmeldenummer: **87907402.9**

(22) Anmeldetag: **13.11.87**

(86) Internationale Anmeldenummer:
**PCT/AT87/00066**

(87) Internationale Veröffentlichungsnummer:
**WO 88/03758 02.06.88 Gazette 88/12**

(51) Int. Cl.⁵: **A 23 B 4/02,** A 22 C 9/00

(54) **WERKZEUGHALTERUNG FÜR EINE PÖKELMASCHINE UND WERKZEUGKOMBINATION ZUR VERWENDUNG IN EINER SOLCHEN HALTERUNG.**

(30) Priorität: **20.11.86 AT 3100/86**

(43) Veröffentlichungstag der Anmeldung:
**13.09.89 Patentblatt 89/37**

(45) Bekanntmachung des Hinweises auf die
Patenterteilung:
**10.10.90 Patentblatt 90/41**

(84) Benannte Vertragsstaaten:
**AT CH DE FR GB IT LI NL SE**

(56) Entgegenhaltungen:
**FR-A-1 395 301**
**FR-A-2 032 012**
**US-A-2 854 342**
**US-A-3 581 651**
**US-A-4 182 002**

(73) Patentinhaber: **INJECT STAR
PÖKELMASCHINEN GESELLSCHAFT M.B.H.
Innstrasse 23
A-1201 Wien (AT)**

(72) Erfinder: **PROSENBAUER, Otto
Innstrasse 23
A-1201 Wien (AT)**

(74) Vertreter: **Brauneiss, Leo et al
Patentanwälte Dipl.-Ing. Leo Brauneiss, Dipl.-
Ing. Dr. Helmut Wildhack Strohgasse 10
A-1030 Wien (AT)**

Courier Press, Leamington Spa, England.

## Beschreibung

Die Erfindung bezieht sich auf eine Werkzeughalterung für eine Pökelmaschine, an der an einem Stichrahmen zumindest eine Reihe von untereinander gleichen, je mit einer Lakezufuhrleitung versehenen Aufnahmen vorgesehen ist, an denen von untereinander unterschiedlichen, mit Lakekanälen versehenen Pökelnadelarten gebildete Werkzeuge wahlweise befestigbar sind, wobei jedes Werkzeug einen an die Aufnahme dicht anschließbaren Anschlußkopf hat, der für alle diese Werkzeuge in die Aufnahme paßt und wobei die Anschlußköpfe mit an die Lakezufuhrleitung anschließbaren Verbindungskanälen für den Lakezustrom zu jeder Pökelnadel versehen sind.

Solche Werkzeughalterungen bringen bei modernen Pökelmaschinen den Vorteil, daß die Pökelung an unterschiedlichen Fleischsorten und Fleischstückgrößen angepaßt werden kann. Manche Fleischsorten benötigen eine verhältnismäßig große Pökellakenmenge, weshalb starke Pökelnadeln mit einem verhältnismäßig breiten inneren Lakekanal Verwendung finden. Andere Fleischsorten erfordern jedoch eine zartere Pökelung, wofür dünnere Nadeln Verwendung finden, die zur Einspritzung geringere Lakemengen pro Zeiteinheit dienen. Die wahlweise Anschließbarkeit durch Anschrauben der Anschlußköpfe der einzelnen Pökelnadelarten ermöglicht es, problemlos von einer Nadelsorte auf die andere Nadelsorte und somit von einer Pökelungsart auf die andere Pökelungsart überzugehen, jeweils bei der gleichen Maschine. Damit wird die Maschine mit nur geringem Umbau für ein breites Anwendungsgebiet verwendbar. Diese Anlagen sind marktgängig.

Es ist auch bekannt, an einem gemeinsamen, zur Lakezuführung dienenden Querbalken einer Pökelmaschine mehrere Nadeln anzuschrauben (FR—A—1 395 301).

Anderseits sind Maschinenen bekannt, bei denen an einem auf- und abgehenden Gestellteil Messer befestigt sind, die in das Fleisch einstechen. Mittels solcher Messer kann eine Tenderisierung des Fleisches durch Vornahme von Schnitten erfolgen, was z.B. für solche Fleichsorten erwünscht ist, die später als Steakfleisch dienen sollen, weshalb solche Maschinen gelegentlich auch "Steaker" genannt werden. Es ist auch bekannt (FR—A—1 2 032 012), an einem gemeinsamen, von Hand oder maschinell betätigbaren Trägerkörper Nadeln und Messer fix vorzusehen. Schließlich ist es bei einem handbetätigten Gerät bekannt (US—A 3 581 651) mehrere Messer an einer Schraubkappe vorzusehen, die auf das Ende eines Behälters für eine Behandlungsflüssigkeit aufgeschraubt wird, die durch Öffnungen des Bodens der Schraubkappe austritt.

Die Erfindung setzt sich zur Aufgabe, die erwähnte Vielseitigkeit einer Pökelmaschine noch zu steigern und die Pökelmaschine mit geringem Aufwand auch anwendbar zu machen für solche Fleischsorten, bei denen—gegebenenfalls zusätzlich zur Pökelung—eine Tenderisierung erforderlich ist. Hiebei soll die hiefür nötige Umrüstung einfach, schnell und betriebssicher mit geringem Arbeitsaufwand durchführbar sein. Die Erfindung löst diese Aufgabe dadurch, daß zur wahlweisen Befestigung an diesen Aufnahmen weitere Anschlußköpfe vorgesehen sind, welche Messer und bzw. oder Nadelkombinationen und bzw. oder Kombinationen aus Messern und Nadeln an ihrem Boden tragen, wobei jeder an die Aufnahme ansteckbare Anschlußkopf jedoch nur für die von ihm getragenen Nadeln von der Lake durchströmte Öffnungen hat, für die Messer jedoch in Bezug auf die Lakezufuhrleitung dicht ist, und daß eine Abziehsicherung für den Anschlußkopf vorhanden ist, z.B. eine Verriegelungsplatte, die am Anschlußkopf unten anliegt und mit Schlitzen versehen ist, in welche die Nadeln bzw. Messer eintreten. Auf diese Weise laßt sich eine Pökelmaschine mit wenigen Handgriffen in eine Maschine umrüsten, mit welcher auch oder nur eine Tenderisierung des Fleisches erfolgen soll. Es sind damit mit einer einzigen Maschine folgende Bearbeitungen möglich: Pökeln allein, Tenderisieren bzw. Steaken allein, Pökeln mit Tenderisieren (Steaken) kombiniert. Alle diese drei Betriebsweisen sind auf jeweils unterschiedliche Weise möglich, da Art und Anzahl der Pökelnadeln gewechselt werden können, ebenso wie die Art und Anzahl der Messer. So ist es z.B. möglich, mehrere Werkzeuge, etwa zwei oder vier Pökelnadeln bzw. Messer an einem gemeinsamen Anschlußkopf zu befestigen, über den die Pökelflüssigkeit den Kanälen der Nadeln zugeführt wird, den Messem jedoch nicht. Der Übergang zwischen den einzelnen Funktionsweisen ist problem los möglich, zumal die Ansteckung der einzelnen Werkzeuge an die Aufnahmen rascher und verläßlicher durchführbar ist als eine Gewindeverbindung, dabei letzterer stets die Gefahr besteht, daß bei unachtsamer Handhabung die Gewindeteile nicht richtig miteinander verbunden werden, so daß es zu einer Beschädigung des Gewindes und damit zu einer mangelhaften Befestigung des Werkzeuges an der Aufnahme kommt, abgesehen von der Gefahr, daß die nicht richtig montierte Gewindeverbindung für die Lake undicht wird. Im Gegensatz dazu wird beim Erfindungsgegenstand ein unbeabsichtigter Austritt von Lake durch die für die Messer dichten Anschlußköpfe verläßlich verhindert. Die Abziehsicherung verhindert, daß der Anschlußkopf durch den Druck der zugeführten Lake oder durch den Widerstand, welchen das Fleisch dem Herausziehen der in das Fleisch eingestochenen Werkzeuge (Nadeln bzw. Messer) entgegensetzt, von der Aufnahme abgezogen wird. Eine die Abziehsicherung bildende Verriegelungsplatte kann in einer Führung des Stichrahmens verschiebbar oder an diesem schwenkbar befestigt sein.

Gemäß einer Weiterbildung der Erfindung weist jeder Anschlußkopf einen in die Aufnahme einsteckbaren Grundkörper auf, mit dem eine den Boden bildende Hülse verbunden, vorzugsweise verschraubt ist, wobei vorzugsweise alle Grundkörper einander gleich ausgebildet sind. Dies zweiteilige Ausbildung des Anschlußkopfes erleichtert einerseits dessen Herstellung, anderseits wird dadurch eine leichte Reinigung der im Anschlußkopf befindlichen Kanäle für die Lake möglich, wobei eine Gewindeverbindung der beiden Grundkörperteile das Auseinandernehmen des Grundkörpers erleichtert. Einander gleiche Grundkörper ermöglichen, es, die einzelnen Bestandteile gegeneinander auszutauschen. Eine besonders günstige Bauweise ergibt sich hiebei erfindungsgemäß dann, wenn im mit dem Grundkörper verbundenen Zustand der Hülse zwischen deren Boden und dem Grundkörper ein Hohlraum besteht, in den die Öffnungen für die Lake münden. Dieser Hohlraum bildet gleichsam einen Verteilerraum für die über die Lakezufuhrleitung zugeleitete Lake, was einer gleichmäßigen Verteilung der Lake für alle vorhandenen Nadeln förderlich ist. Vorzugsweise ist im Rahmen der Erfindung die Anordnung so getroffen, daß der Anschlußkopf mittels eines vom Lakekanal durchsetzten, rotationssymmetrischen Zapfens in eine passende, eine Erweiterung der Lakezufuhrleitung bildende Bohrung der Aufnahme eingesetzt ist. Ein solcher Steckzapfen ist einfach zu montieren und ermöglicht es, das Werkzeug um seine Längsachse zu drehen, was aus verschiedenen Gründen vorteilhaft ist: Einerseits wird es dadurch möglich, die Richtungen der Schnitte der Messer nach Wunsch einzustellen, anderseits besteht, diese Möglichkeit auch für die Richtung des Lakeausstromes aus den Pökelnadeln. Die kombinierte Anordnung von Messern und Pökelnadeln bringt an sich schon den Vorteil, daß die Verteilung der Lake im Fleisch durch die von den Messern hervorgerufenen Schnitte begünstigt wird, jedoch gilt dies umso mehr, je mehr die Lake in Richtung zu diesen Schnitten in das Fleisch eingespritzt wird. Bei Verwendung einer geschlitzten Verriegelungsplatte hat die rotationssymetrische Ausbildung des Steckzapfens auch den Vorteil, daß das betreffende Werkzeug so gedreht werden kann, daß seine Messer bzw. Nadeln problemlos in die Schlitze der Verriegelungsplatte eintreten können.

Die Erfindung bezieht sich ferner auf eine Werkzeugkombination zur Verwendung in einer Werkzeughalterung der beschriebenen Art. Die erfindungsgemäße Kombination besteht darin, daß an einem gemeinsamen Anschlußkopf zumindest eine Nadel und zumindest ein Messer befestigt sind. Wie bereits erwähnt, ist damit eine kombinierte Pökelung und Tenderisierung möglich. Die Anordnung der Nadeln und der Messer an einem gemeinsamen Anschlußkopf hat den Vorteil, daß diese Werkzeuge einander sehr nahe benachbart sind, so daß die von der Nadel verspritzte Pökelflüssigkeit bis zu den von den Messern gebildeten Schlitzen im zu bearbeitenden Fleisch gelangen kann, und zwar zu einem Zeitpunkt, zu welchem diese Schlitze gerade erst gebildet wurden, so daß sich der Schlitz nicht wieder schließen kann. Dadurch wird der Pökelflüssigkeit besserer Zugang zu den dem Einstichbereich der Nadel benachbarten Flieschpartien geboten, insbesondere wenn gemäß einer Weiterbildung der Erfindung am Anschlußkopf mehrere Messer, vorzugsweise in gleichen Abständen voneinander verteilt, rings um eine mittige Nadel befestigt sind. Es wird dadurch eine Verteilung der durch die Nadel zugeführten Pökelflüsigkeit nach allen Richtungen durchgeführt, so daß örtliche Über- bzw. Unterpökelungen besser vermieden werden können als bisher. Die besten Ergebnisse ergeben sich hiebei im Rahmen der Erfindung, wenn die Messer radial in Bezug auf die mittige Nadel angeordnet sind, da die radial angeordneten, von den Messern erzeugten Schlitze der radiale Auswärtsströmung der Lake vom Einstichpunkt begünstigen.

Eine andere erfindungsgemäße Werkzeugkombination zur Verwendung in einer Werkzeughalterung der beschrieben Art besteht darin, daß an einem gemeinsamen Anschlußkopf zumindest zwei Messer befestigt sind. Hiedurch wird eine intensive Bearbeitung des Fleisches im Sinne eines Tenderisierens oder Steakens erzielt, wobei durch unterschiedliche Richtungen der Messerebenen unterschiedliche Faserverläufe im Fleisch mit Sicherheit erfaßt werden, so daß der gewünschte Effekt unabhängig davon ist, wie der Faserverlauf im betreffenden Fleischstück ist bzw. wie dieses Fleischstück auf der Auflage der Maschine liegt.

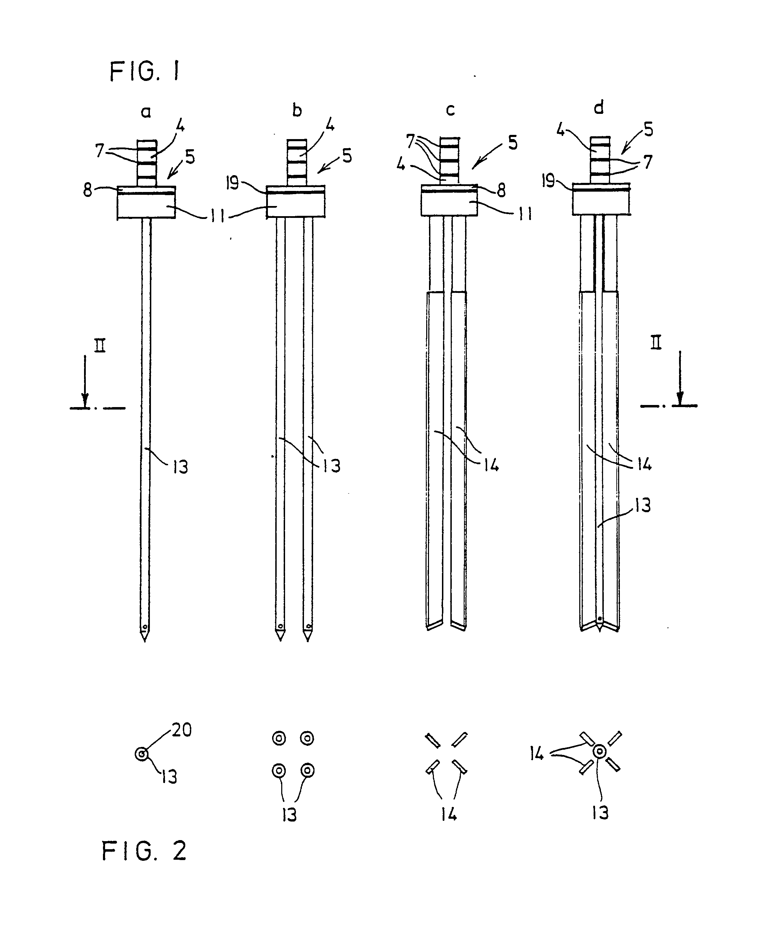

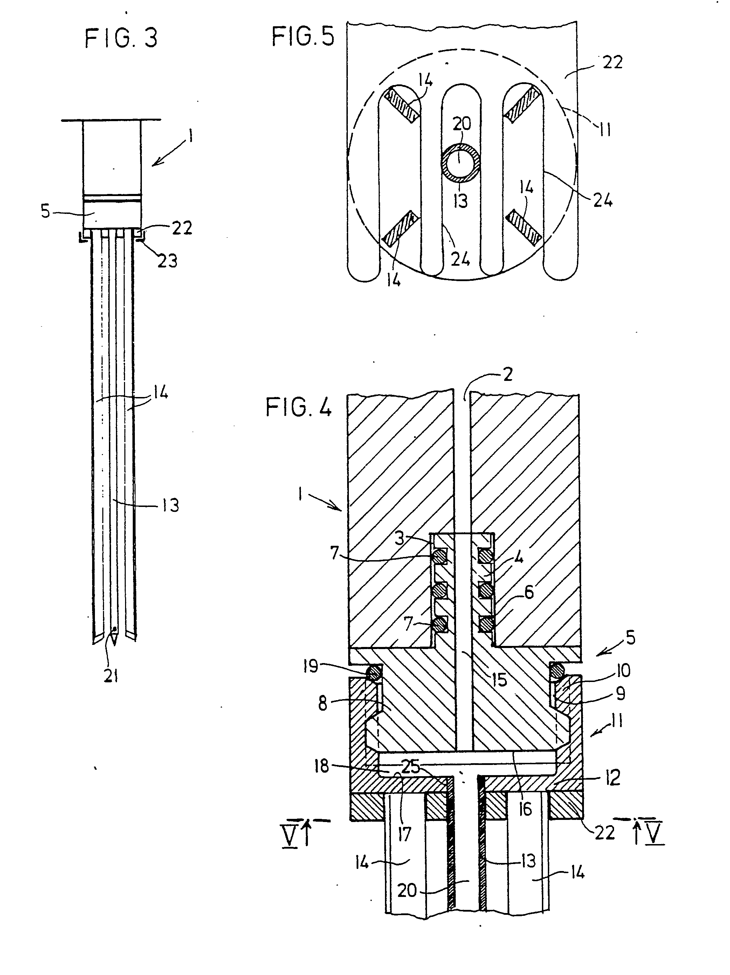

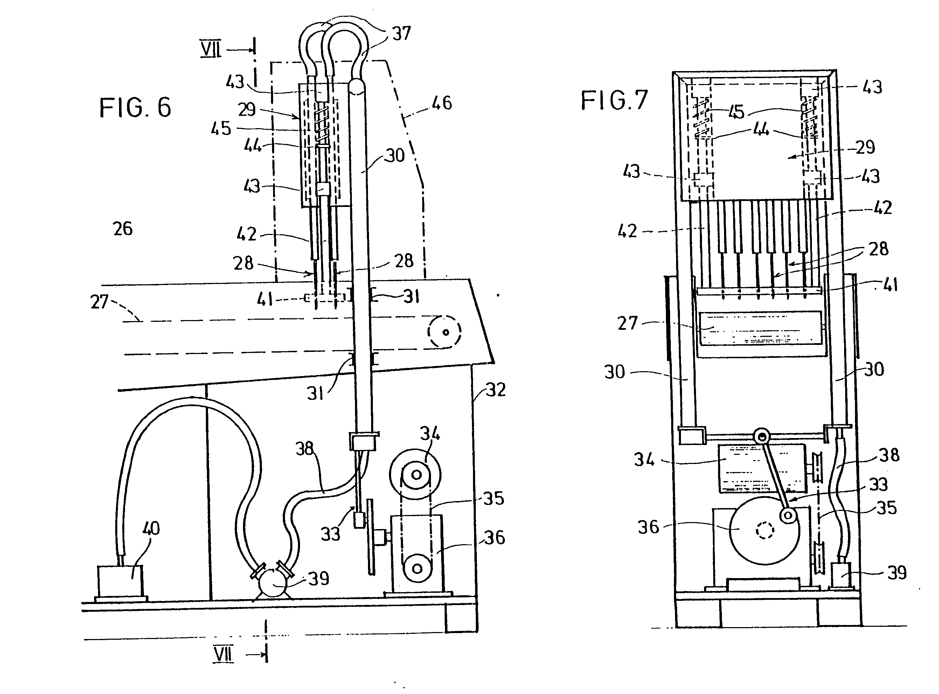

In der Zeichnung ist der Erfindungsgegenstand an Hand von Ausführungsbeispielen schematischen veranschaulicht. Fig. 1 zeigt vier verschiedene Werkzeuge in Seitenansicht. Fig. 2 ist ein Schnitt nach der Linie II—II der Fig. 1. Fig. 3 zeigt ein an eine Aufnahme angeschlossenes Kombinationswerkzeug in Seitenansicht. Fig. 4 zeigt ein Detail der Fig. 3 in größerem Maßstab und im Schnitt und Fig. 5 ist ein Schnitt nach der Linie V—V der Fig. 4. Fig. 6 zeigt die Anordnung solcher Werkzeuge an einer Pökelmaschine und Fig. 7 ist ein Schnitt nach der Linie VII—VII der Fig. 6.

An einer Pökelmaschine 26 (Fig. 6, 7) wird das zu pökelnde Gut (insbesondere Fleisch) auf einer als Förderband ausgebildeten Auflagefläche 27 den Werkzeugen 28 zugeführt, z.B. Injiziernadeln für einzuspritzende Lake. Die Werkzeuge 28 sind in einem Nadelkasten 29 gehalten, der gegen die Auflagefläche 27 verschiebbar angeordnet ist. Der Nadelkasten 29 ist an einem von Rohren gebildeten Stichrahmen 30 befestigt, der in Gleitlagern 31 des Maschinengestelles 32 auf und ab verschiebbar gelagert ist. Der Antrieb des Stichrahmens 30 zu dieser Bewegung erfolgt über einen Kurbeltrieb 33 von einem Motor 34 aus über einen Riemen 35 und ein Getriebe 36. Zur Versorgung der Injiziernadeln mit Lake sind die Injiziernadeln mittels Schläuchen 37 an die Rohre des Stichrahmens 30 angeschlossen, der unten an einen Schlauch 38 angeschlossen ist, dem die Lake von einer Pumpe 39 zugeführt wird. Die Pumpe saugt die Lake über einen Schlauch von einer Lakequelle 40 aus an.

Um zu vermeiden, daß die Werkzeuge 28 beim Auftreffen auf einen im Fleisch befindlichen Knochen beschädigt werden, sind die Werkzeuge im Nadelkasten 29 entgegen der Wirkung von nicht dargestellten Federn nachgiebig gelagert. Die Werzeuge können auch verschwenkbar im Nadelkasten gehaltert sein.

Weiters ist ein Abstreifer 41 vorgesehen, der an zwei Stangen 42 aufgehängt ist, die in am Nadelkasten befestigten Gleitlagern 43 längsverschiebbar geführt sind. Jede Stange 42 trägt einen an ihr verstellbar festgelegten Ring 44, der das eine Wiederlager einer Feder 45 bildet, deren anderes Ende gegen das jeweils obere Gleitlager 43 abgestützt ist. Bei der Abwärtsbewegung des Nadelkastens 29 wird der Abstreifer 41 so lange mitgeführt, bis er auf dem zu behandelnden Gut zur Auflage kommt, worauf der Nadelkasten mit den erkzeugen weiter abgesenkt wird, der Abstreifer hingegen in seiner Lage verbleibt. Die Federn 45 werden dabei gespannt. Geht der Nadelkasten 29 wieder noch, so entspannen sich die Federn 45 wieder und der Abstreifer 41 wird vom Fleisch abgehoben, sobalt das jeweils unter Gleitlager 43 am Ring 44 zur Anlage kommt. Diese Realtivverschiebung des Abstreifers 41 in Bezug auf den nadelkasten 29 kann zur Steuerung des Lakezustromes zu den Injiziernadeln in bekannter Weise ausgenützt werden, so daß aus den Injizierenadeln nur dann Lake austritt, wenn diese Nadeln in das Fleisch eingedrungen sind.

Zweckmäßig bewegt sich das die Auflagefläche 27 bildende Förderband schrittweise, um das zu pökelnde Gut im Ruhezustand bearbeiten zu können. Die hiezu verwendeten, in Reihen quer zur Bewegungsrichtungen des Fleisches angeordneten Aufnahmen 1 (Fig. 3, 4) zur Aufnahme der auf das Fleisch einwirkenden Werkzeuge 28 (Nadeln und/oder Messer) sind jeweils mit einer mittigen Lakezufuhrleitung 2 für die Zufuhr von Pökelflüssigkeit versehen, welche Leitung sich gegen das untere Ende der Aufnahme 1 zu in eine Bohrung 3 erweitert, in die ein rotationssymmetrischer Zapfen 4 eines Anschlußkopfes 5 passend einsteckbar ist. Der Zapfen 4 hat an seinem Umfang mehrere Ringnuten 6 zur Aufnahme von der Abdichtung der Pökelflüssigkeit dienenden O-Ringen 7 und ist an seinem unteren Ende mit einem Grundkörper 8 des Anschlußstückes 5 einstückig ausgebildet. Der Grundkörper 8 trägt an seinem Außenumfang ein Gewinde 9, auf welches ein Innengewinde 10 einer Hülse 11 aufgeschraubt ist, die an ihrem unteren Ende durch einen Boden 12 abgeschlossen ist, an welchem zumindest eines der Werkzeuge 28, als zumindest eine Nadel 13 und bzw. oder zumindest ein Messer 14, befestigt ist. Im dargestellten Ausführungsbeispiel (Fig. 3, 4, 5) trägt die Hülse 11 unten eine mittig angeordnete Nadel 13, um die herum vier Messer in gleichmäßigen Abständen voneinander und symmetrisch zur Längsachse der Aufnahme 1 angeordnet sind.

An die Lakezufuhrleitung 2 der Aufnahme 1 schließt ein Verbindungskanal 15 im Zapfen 4 und im Grundkörper 8 an, der die Lake zur Bodenfläche 16 des Grundkörpers 8 führt, die bei völlig aufgeschraubter Hülse 11 von deren Deckfläche 17 im Abstand liegt, so daß zwischen diesen beiden Flächen 16, 17 ein Hohlraum 18 gebildet wird. Dieser Hohlraum 18 ist nach außen durch eine zwischen einen Flansch des Grundkörpers und den Oberrand der Hülse 11 eingelegt Ringdichtung 19 abgedichtet. Die von einem Rohr gebildete Nadel 13 durchsetzt den Boden 12, so daß ihr Lakekanal 20 mit dem Hohlraum 18 in Verbindung steht. Hiezu hat der Boden 12 der Hülse 11 (Fig. 4) für jede Nadel 13 eine Öffnung 25, in welche die Nadel 13 eingesetzt werden kann. Für die Messer 14 bzw. deren Ansatzstellen am Boden 12 ist dieser Boden jedoch dicht, so daß keine Lake unbeabsichtigt austreten kann. Aus dem Lakekanal 20 der Nadel 13 tritt die Lake, die über die Lakezufuhrleitung 2 unter Druck zugeführt wird, durch eine oder mehrere Öffnungen 21 (Fig. 3) im Bereich der Spitze der Nadel 13 aus.

Um zu vermeiden, daß der Anschlußkopf 5 durch den im Hohlraum 18 herrschenden Lakedruck von der Aufnahme 1 abgezogen wird, kann eine Verriegelungsplatte 22 vorgesehen sein, die in einer Führung 23 (Fig. 3) des Nadelkastens in horizontaler Richtung verschiebbar geführt sein kann. Diese Verriegelungsplatte 2 ist mit in Verschiebungsrichtung verlaufenden Schlitzen 24 versehen, in welche die Werkzeuge (Nadeln 13 bzw. Messer 14) in der Verriegelungsstellung der Verriegelungsplatte 22 eintreten (Fig. 5). In der Verriegelungstellung kann die Verriegelungsplatte 22 durch nicht dargestellte Fixiermittel, z.B. einen in eine Rast einrastenden federnden Vorsprung gesichert sind, um eine unbeabsichtige Lösung zu vermeiden.

Nach Zurückschieben der Verriegelungsplatte 2 ist der Anschlußkopf 5 samt den von ihm getragenen Werkzeugen leicht von der Aufnahme 1 zu trennen. Die Steckverbindung ermöglicht es, die von dem betreffenden Ansschlußkopf 5 getragenen Werkzeuge gegen andere Werkzeuge problemlos auszutauschen. Diese anderen Werkzeuge bzw. Werkzeugkombinationen sind an gleichartigen und gleichgroßen Anschlußköpfen 5 befestigt (Fig. 1), welche in die Aufnahme 1 passen. in Fig. 1 sind mit a, b, c, d, vier Beispiele darstellt, von welchen das Beispiel d eine als Mehrfachwerkzeug ausgebildete Werkzeugkombination zeigt, welche jener nach den Fig. 3 bis 5 entspricht, also eine mittige Nadel 13 oder vier um sie herum im Kreis angeordnete Messer 14 aufweist. Diese Werkzeugkombination bildet daher ein Mehrfachmesser mit Nadel.

Bei der Werkzeugkombination c (Fig. 1) sind vier Messer 14 in der gleichen Weise angeordnet wie bei der Kombination d, jedoch fehlt die mittige Nadel.

Bei der Werkzeugkombination b sind vier einander gleiche Nadeln 13 im Quadrat angeordnet. Diese Werkzeugkombination bildet daher eine Mehrfachnadel.

Bei der Variante a ist lediglich eine einzige Nadel 13 am Anschlußkopf 5 befestigt, welche jedoch dicker und mit einem im Durchmesser grösseren Lakekanal 20 ausgebildet sein kann als die Nadel 13 bei der Variante b.

Bei den Varianten c und d sind die Messer 14 mit ihren Querschnittsebenen radial in Bezug auf die Mitte bzw. die Achse der Nadel 13 angeordnet. Dies begünstige die Verteilung der von der Nadel verspritzten Pökelflüssigkeitsmenge im Fleisch.

Die in Fig. 1 darstellten Werkzeugkombinationen können auch Nadeln unterschiedlich Stärke beinhalten.

Statt einer veschiebbaren Verriegelungsplatte 22 kann auch eine verschwenkbar gelagerte Verriegelungsplatte treten, die z.B. um eine horizontale Achse am Nadelkasten 29 verschwenkbar gehaltert sein kann oder auch um eine vertikale Achse einschwenkbar sein kann.

Der Nadelkasten und die Werkzeuge können durch eine strichpunktiert angedeutetes Gehäuse 46 (Fig. 6) abgedeckt sein.

## Patentansprüche

1. Werkzeughalterung für eine Pökelmaschine (26), an der an einem Stichrahmen (30) zumindest eine Reihe von untereinander gleichen, je mit einer Lakezuführleitung (2) versehenen Aufnahmen (1) vorgesehen ist, an denen von untereinander unterschiedlichen, mit Lakekanälen (20) versehenen Pökelnadelarten gebildete Werkzeuge (28) wahlweise befestigbar sind, wobei jedes Werkzeug (28) einen an die Aufnahme (1) dicht anschließbaren Anschlußkopf (5) hat, der für alle diese Werkzeuge (28) in die Aufnahme (1) paßt, und wobei die Anschlußköpfe (5) mit an die Lakezufuhrleitung (2) anschließbaren Verbindungskanälen (15) für den Lakezustrom zu jeder Pökelnadel (13) versehen sind, dadurch gekennzeichnet, daß zur wahlweisen Befestigung an diesen Aufnahmen (1) weitere Anschlußköpfe (5) vorgesehen sind, welche Messer (14) und bzw. oder Nadelkombinationen und bzw. oder Kombinationen aus Messern (14) und Nadeln (13) an ihrem Boden (12) tragen, wobei jeder an die Aufnahme (1) ansteckbare Anschlußkopf (5) jedoch nur für die von ihm getragenen Nadeln (13) von der Lake durchströmte Öffnungen (25) hat, für die Messer (14) jedoch in Bezug auf die Lakezufuhrleitung (2) dicht ist und daß eine Abziehsicherung für den Anschlußkopf (5) vorhanden ist, z.B. eine Verriegelungsplatte (22), die am Anschlußkopf unten anliegt und mit Schlitzen (24) versehen ist, in welche die Nadeln (13) bzw. Messer (14) eintreten.

2. Werkzeughalterung nach Anspruch 1, dadurch gekennzeichnet, daß jeder Anschlußkopf (5) einen in die Aufnahme (1) einsteckbaren Grundkörper (8) aufweist, mit dem eine den Boden (12) bildende Hülse (11) verbunden, vorzugsweise verschraubt, ist, wobei vorzugsweise alle Grundkörper (8) einander gleich ausgebildet sind.

3. Werkzeughalterung nach Anspruch 1 oder 2, dadurch gekennzeichnet, daß im mit dem Grundkörper (8) verbundenen Zustand der Hülse (11) zwischen dieser und dem Grundkörper (8) ein Hohlraum (18) besteht, in den die Öffnungen (25) münden.

4. Werkzeughalterung nach Anspruch 1, 2 oder 3, dadurch gekennzeichnet, daß der Anschlußkopf (5) mittels eines vom Lakekanal (15) durchsetzten, rotationssymmetrischen Zapfens (4) in eine passende, eine Erweiterung der Lakezufuhrleitung (2) bildende Bohrung (3) der Aufnahme (1) eingesetzt ist.

5. Werkzeugkombination zur Verwendung in einer Werzeughalterung nach einem der Ansprüche 1 bis 4, dadurch gekennzeichnet, daß an einem gemeinsamen Anschlußkopf (5) zumindest eine Nadel (13) und zumindest eine Messer (14) befestigt sind.

6. Werkzeugkombination nach Anspruch 5, dadurch gekennzeichnet, daß am Anschlußkopf (5) mehrere Messer (14), vorzugsweise in gleichen Abständen voneinander verteilt, rings um eine mittige Nadel (13) befestigt sind.

7. Werkzeugkombination nach Anspruch 6, dadurch gekennzeichnet, daß die Ebenen der Messer (14) radial in Bezug auf die mittige Nadel (13) angeordnet sind.

8. Werkzeugkombination zur Verwendung in einer Werkzeughalterung nach einem der Ansprüche 1 bis 4, dadurch gekennzeichnet, daß an einem gemeinsamen Anschlußkopf (5) zumindest zwei Messer (14) befestigt sind.

## Revendications

1. Porte-outils pour une machine de salage (26), sur lequel est prévue, sur un cadre de pointage (30), au moins une rangée de logements (1) mutuellement identiques, munis chacun d'un conduit (2) d'arrivée de saumure et auxquels peuvent être sélectivement fixés des outils (28) formés par des types mutuellement différents d'aiguilles de salaison pourvues de canaux (20) à saumure, chaque outil (28) comportant une tête de raccordement (5) qui peut être raccordée au logement (1) de manière étanche, et s'adapte audit logement (1) pour tous ces outils (28), et les têtes de raccordement (5) étant dotées de canaux de jonction (15) pouvant être raccordés au conduit (2) d'arrivée de saumure, en vue de l'afflux de saumure vers chaque aiguille de salaison (13), caractérisé par le fait que d'autres têtes de raccordement (5) prévues pour la fixation sélective à ces logements (1), portent sur leur fond (12) des lames (14) et/ou des combinaisons d'aiguilles et/ou des combinaisons de lames (14) et d'aiguilles (13), chaque tête de raccordement (5) emboîtable sur le logement (1) étant toutefois percée, uniquement pour les aiguilles (13) qu'elle porte, d'orifices (25) parcourus par la saumure, mais étant toutefois, concernant les lames (14), étanche par rapport au conduit (2) d'arrivée de saumure; et par la présence d'une sécurité anti-déboîtement pour la tête de raccordement (5), par exemple d'une plaque de verrouillage (22) appliquée par en bas contre ladite tête de raccordement, et munie de fentes (24) dans lesquelles les aiguilles (13) ou les lames (14) pénètrent respectivement.

2. Porte-outils selon la revendication 1, caractérisé par le fait que chaque tête de raccordement (5) présente un corps de base (8) qui peut être emboîté dans le logement (1) et auquel est reliée, de préférence boulonnée une douille (11) formant le fond (12), tous les corps de base (8) étant de préférence d'une réalisation identique.

3. Porte-outils selon la revendication 1 ou 2, caractérisé par le fait qu'une cavité (18), dans laquelle les orifices (25) débouchent, est délimitée entre la douille (11) et le corps de base (8) dans la condition dans laquelle ladite douille est reliée au corps de base (8).

4. Porte-outils selon la revendication 1, 2 ou 3, caractérisé par le fait que la tête de raccordement (5) est engagée, au moyen d'un tenon (4) à symétrie de révolution parcouru par le canal (15) à saumure, dans un perçage adapté (3) du logement (1) qui forme un élargissement du conduit (2) d'arrivée de saumure.

5. Combinaison d'outils destinée à être utilisée dans un porte-outils selon l'une des revendications 1 à 4, caractérisée par le fait qu'au moins une aiguille (13) et au moins une lame (14) sont fixées à une tête commune de raccordement (5).

6. Combinaison d'outils selon la revendication 5, caractérisée par le fait que plusieurs lames (14), de préférence réparties selon des intervalles mutuellement égaux, sont fixées à la tête de raccordement (5) tout autour d'une aiguille centrale (13).

7. Combinaison d'outils selon la revendication 6, caractérisée par le fait que les plans des lames (14) sont disposés radialement par rapport à l'aiguille centrale (13).

8. Combinaison d'outils destinée à être utilisée dans un porte-outils selon l'une des revendications 1 à, 4 caractérisée par le fait qu'au moins deux lames (14) sont fixées à une tête commune de raccordement (5).

## Claims

1. A tool holding device for a curing machine (26) in which at least one series of mutually identical holders (1) each equipped with a brine supply line (2) is provided on a piercing frame (30), to which holders tools (28) formed by types of curing needles differing from one other and provided with brine channels (20) may be optionally attached, each tool (28) having a connecting head (5) which can be sealingly connected to the holder (1) and which, in the case of all these tools (28), fits into the holder (1), and the connecting heads (5) being provided with connection channels (15), connectable to the brine supply line (2), for the brine supply to each curing needle (13), characterized in that, for optional attachment to these holders (1), there are provided further connecting heads (5) which carry blades (14) and/or needle combinations and/or combinations of blades (14) and needles (13) on their base (12), each connecting head (5) mountable on the holder (1) having, however, openings (25), through which the brine flows, only for the needles (13) carried by it, but in the case of the blades (14) is sealed with respect to the brine supply line (2), and in that there is a pull-off guard for the connecting head (5), for example a locking plate (22), which abuts against the connecting head at the bottom and is provided with slots (24) into which the needles (13) or blades (14) enter.

2. A tool holding device according to Claim 1, characterized in that each connecting head (5) has a main body (8) which can be inserted into the holder (1) and together with which a sleeve (11) forming the base (12) is connected, preferably screwed, preferably all the main bodies (8) being constructed identical to each other.

3. A tool holding device according to Claim 1 or 2, characterized in that in the condition where the sleeve (11) is connected to the main body (8) there exists, between the said sleeve and the main body (8), a cavity (18) into which the openings (25) lead.

4. A tool holding device according to Claim 1, 2 or 3, characterized in that the connecting head (5) is inserted into a matching bore (3) of the holder (1), forming an enlargement of the brine supply line (2), by means of a rotationally symmetrical spigot (4) through which the brine channel (15) passes.

5. A tool combination for use in a tool holding device according to one of Claims 1 to 4, characterized in that at least one needle (13) and at least one blade (14) are attached to a common connecting head (5).

6. A tool combination according to Claim 5, characterized in that several blades (14) are attached around a central needle (13), distributed preferably at equal distances from each other.

7. A tool combination according to Claim 6, characterized in that the planes of the blades (14) are arranged radially with respect to the central needle (13).

8. A tool combination for use in a tool holding device according to one of Claims 1 to 4, characterized in that at least two blades (14) are attached to a common connecting head (5).

FIG. 1

FIG. 2

FIG. 3

FIG.5

FIG. 4

FIG.7

FIG. 6